Europäisches Patentamt

European Patent Office

Office européen des brevets

(19)

(11) Veröffentlichungsnummer : **0 146 110**
**B1**

(12) **EUROPÄISCHE PATENTSCHRIFT**

(45) Veröffentlichungstag der Patentschrift :
11.10.89

(21) Anmeldenummer : 84115202.8

(22) Anmeldetag : 12.12.84

(51) Int. Cl.⁴ : **B 23 C   3/00**

(54) **Vorrichtung zum Herstellen einer Querriffelung an längsgerippten Bodenplatten od. dgl.**

(30) Priorität : 15.12.83 AT 4365/83

(43) Veröffentlichungstag der Anmeldung :
26.06.85 Patentblatt 85/26

(45) Bekanntmachung des Hinweises auf die Patenterteilung : 11.10.89 Patentblatt 89/41

(84) Benannte Vertragsstaaten :
CH DE FR LI NL SE

(56) Entgegenhaltungen :
EP--A-- 0 082 276
CH--A--   315 529
DE--A-- 2 552 484
FR--A-- 2 256 807
US--A-- 3 011 530
US--A-- 4 188 934

(73) Patentinhaber : Austria Metall Aktiengesellschaft

A-5282 Braunau am Inn (AT)

(72) Erfinder : Falk, Friedrich, Ing.
Mozartgasse 56
A-5280 Braunau/Ranshofen (AT)

(74) Vertreter : Hain, Leonhard, Dipl.-Ing.
Tal 18/IV
D-8000 München 2 (DE)

**Beschreibung**

Die Erfindung betrifft eine Vorrichtung zum Herstellen einer Querriffelung an längsgerippten Oberflächen von rutschfesten Bodenplatten od. dgl. Profilen gemäß dem Oberbegriff des Patentanspruches 1.

Um auf begehbaren Plattformen od. dgl. Flächen, insbesondere auf Ladebordwandplateaus, Lastkraftwagen-Plateaus, Treppen, Trittflächen usw. eine rutschsichere Oberfläche zu schaffen, werden neben Warzenblechen und Blechen mit aufgespritzten oder aufgeklebten Antirutschbelägen auch geriffelte Strangpreßprofile verwendet, die aber nur quer zur Preßrichtung rutschsicher sind. In der Praxis wurde aber auch schon bekannt, die Längsrippen stellenweise durch Walzen zu quetschen oder durch Fräsen oder Stanzen in geeigneten Maschinenanlagen zu unterbrechen, um dadurch die Rutschsicherheit auch in Preßrichtung zu gewährleisten. Dabei ergeben sich aber unterschiedlich tiefe Querriffelungen, da die Profile infolge nicht zu vermeidender Preßtoleranzen meist unebene Oberflächen aufweisen. Werden dann die Einzelprofile mit den Querriffelungen zu einer Plattenform zusammengebaut, so ist es schwierig, eine Ausrichtung in Querrichtung, die auch optisch entspricht, zu bekommen. Zudem werden beim Zusammenbau häufig noch größere Verschnitte an den Profilen erforderlich. Zum Bearbeiten von Gesteinsblöcken ist eine Vorrichtung (CH-A-315 529) bekanntgeworden, die nach dem Einschneiden von Längsnuten ein Netz von querverlaufenden Einschnitten einfräst. Dazu wird diese Fräsmaschine auf auf der Gesteinsfläche befestigten Führungsschienen verschoben. Auf einer motorisch angetriebenen, zur Gesteinsfläche parallelen und quer zur Schienenrichtung verlaufenden Arbeitswelle sind auf Distanz einstellbare Gesteinsfräser angeordnet. Da diese Fräsmaschine auf zusätzliche Führungsschienen angewiesen ist, ist sie zum Querriffeln von bereits längsgerippten Profilen nicht brauchbar, weil das Verlegen der Führungsschienen auf den zu bearbeitenden Profilen sehr aufwendig ist und außerdem die Preßtoleranzen und Unebenheiten an den Profilen infolge der Schienenführung nicht ausgeglichen werden können. Bei einer anderen Maschine für die spanabhebende Bearbeitung von Flächen (DE-A-2 552 484) ist eine Messerwalze in einem über die Fläche zu führenden Gehäuse gelagert. Zur Festlegung der Frästiefe wird diese Messerwalze von über die zu bearbeitende Fläche gleitenden Auflageplatten abgestützt. Da beim Einsatz dieser Fräsmaschine auf längsgerippten Profilen die Auflageplatten als Abstandhalter wiederum über mehrere Längsrippen gleiten, können auch mit dieser Vorrichtung die vorerwähnten Mängel nicht behoben werden.

Der Erfindung liegt daher die Aufgabe zugrunde, eine Vorrichtung zum Herstellen einer Querriffelung an längsgerippten Profilen zu schaffen, die eine mit der Profil-Grundfläche übereinstimmende Querriffelung gewährleistet.

Diese Aufgabe wird mit einer Vorrichtung gemäß dem Oberbegriff des Patentanspruches 1 erfindungsgemäß durch die kennzeichnenden Merkmale dieses Patentanspruches gelöst.

Durch die Abstützung der mit den Fräserblättern ausgerüsteten Antriebswelle mit Stützrädern, die auf der Grundfläche der Profile abrollen, wird eine örtliche Anpassung an die Unebenheiten der Profiloberfläche und damit eine gleiche Einschnittiefe in die Längsrippen erreicht. Dadurch können auch zu Plattformen zusammengesetzte Profile bearbeitet und dabei gleich tiefe Querriffelungen gewonnen werden.

Zur Führung der Antriebswelle kann an einem Gehäuse eine zusätzliche Führungsrolle angebracht sein.

Die Vorschubbewegung der Vorrichtung wird vorzugsweise von Hand oder auch mechanisch bewerkstelligt. Bei der mechanischen Bewegung läuft die Vorrichtung in einem Führungsrahmen, der Anpreßdruck auf das Plateau bzw. das Profil muß dabei über Federkraft oder Stoßdämpfer erfolgen, damit die Ungleichmäßigkeiten der Oberfläche ausgeglichen werden können.

Die Erfindung wird nachfolgend an einem Ausführungsbeispiel, das auch in der Zeichnung dargestellt ist, näher beschrieben. Es zeigen:

Fig. 1 und Fig. 1a ein zu bearbeitendes Profil im Querschnitt und Draufsicht,

Fig. 2 einen Schnitt durch eine Schneidvorrichtung und

Fig. 3 einen Querschnitt nach der Linie V-V der Fig. 2.

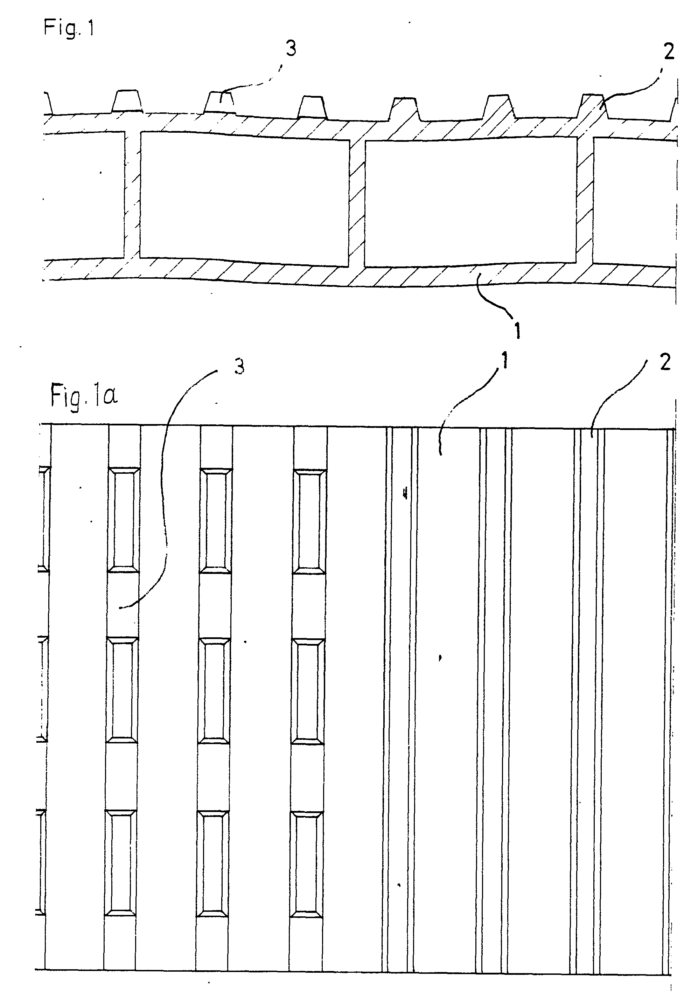

In Fig. 1 ist ein Profil 1 im Querschnitt und in Draufsicht dargestellt, wobei die Querschnittsdarstellung die Unebenheiten an der Oberfläche — stark übertrieben — erkennen läßt. Die Längsrippen 2 sind schon auf der einen Hälfte ausgeschnitten, um eine Querriffelung 3 zu bilden. Auf der zweiten Flächenhälfte sind die Längsrippen 2 noch durchgehend dargestellt.

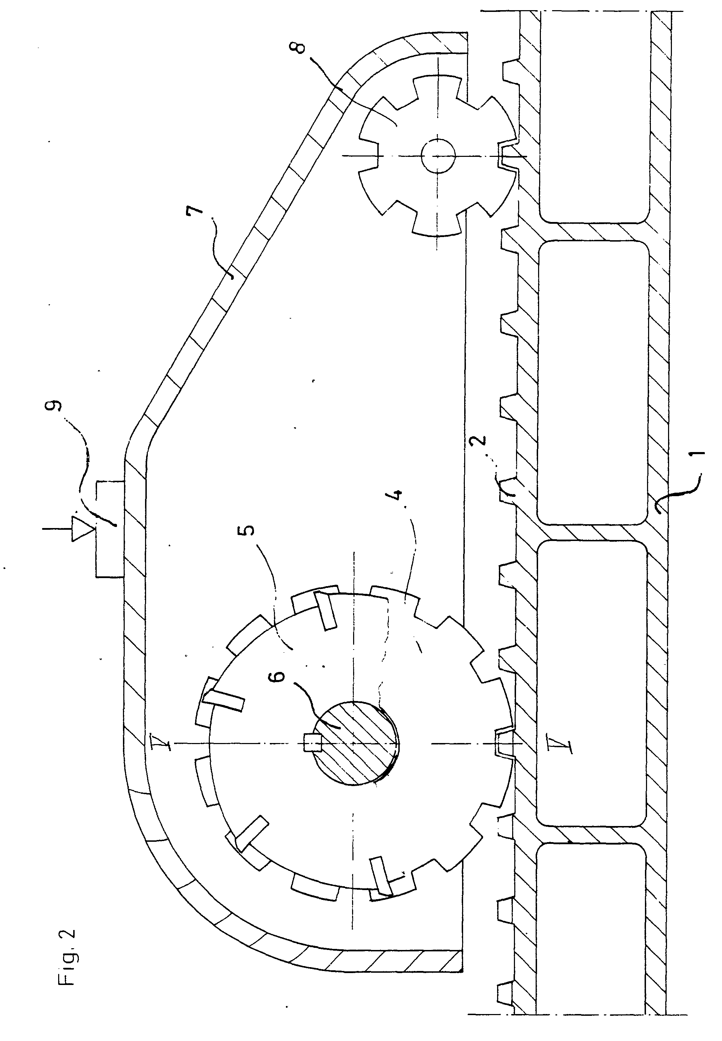

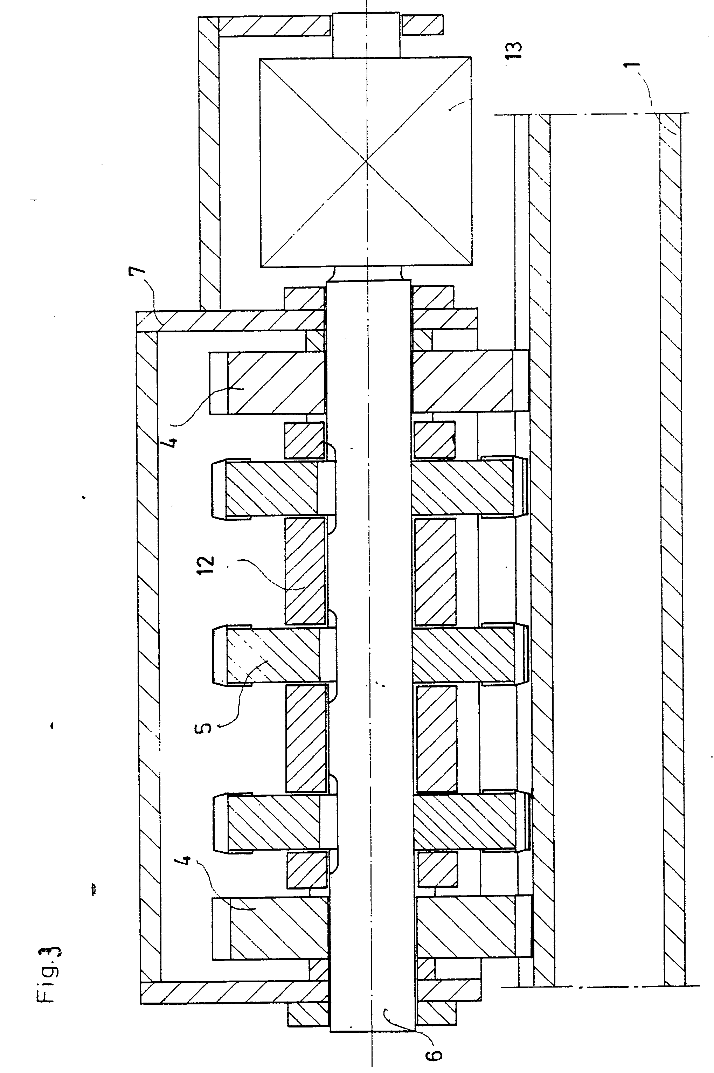

Fig. 2 zeigt eine komplette Schneidvorrichtung mit zahnradartigen Stützrädern 4. Ein Stützrad 4, teilweise geschnitten dargestellt, wälzt sich auf der Grundfläche des Profiles 1 zwischen den Längsrippen 2 ab und hält so ein Fräserblatt 5 auf genaue Distanz zur Grundfläche des Profiles 1, weil der Durchmesser des Stützrades etwas größer ist als der des Fräserblattes 5. Beliebig viele Fräserblätter 5 sind auf einer Antriebswelle 6 aufgekeilt, während die äußeren Stützräder 4 lose auf dieser Welle 6 drehbar gelagert sind. Ein Gehäuse 7 verbindet die Antriebswelle mit einem vorderen Führungsrad 8 zum Zwecke der besseren Führung der Vorrichtung. Entweder von Hand oder bei Verwendung eines starren Führungsrahmens mittels Federkraft wird die Vorrichtung bei 9 zum Andrücken auf das zu bearbeitende Profil belastet. In Fig. 3 ist diese Schneidvorrichtung im Querschnitt dargestellt. Dabei sind die beiden außenseitig angeordneten Stützräder 4, die die Distanz zur Oberfläche des Profiles halten und die dazwischenliegenden Fräserblätter 5 deutlicher zu sehen. Distanzbüchsen 12 halten den Abstand zwischen den Fräserblättern. Ein Antrieb 13 der Welle 6 erfolgt elektrisch oder anderweitig und ist am Gehäuse befestigt.

## Patentansprüche

1. Vorrichtung zum Herstellen einer Querriffelung (3) an längsgerippten Oberflächen von rutschfesten Bodenplatten od. dgl. Profilen (1) mit auf einer gemeinsamen Antriebswelle (6) aufgekeilten Fräserblättern (5) od. dgl. Schneidwerkzeugen und mit die Antriebswelle bei ihrer Vorwärtsbewegung über die Oberfläche der Längsrippen (2) beidseitig abstützenden Abstandhaltern, dadurch gekennzeichnet, daß die Abstandhalter für die Antriebswelle (6) und die Fräserblätter (5) zwei zahnradartige Stützräder (4) sind, die auf der Grundfläche des Profiles (1) abrollen und die einen etwas größeren Durchmesser als die Fräserblätter (5) aufweisen.

2. Vorrichtung nach Anspruch 1, dadurch gekennzeichnet, daß zur Führung eines die Antriebswelle (6) mit Fräserblättern (5) umgebenden Gehäuses (7) ein kleines Führungsrad (8) vorgesehen ist.

## Claims

1. Device for manufacturing cross-grooves (3) on length-wise grooved surfaces of antiskid bottom plates or the like profiles (1) having milling blades (5) or the like cutting tools wedged-up on a common drive shaft (6) and spacers supporting the drive shaft on both sides during its forward movement across the surface of the longitudinal grooves (2), characterized in that the spacers for the drive shaft (6) and the milling blades (5) are two toothed supporting wheels (4) rolling on the basic surface of the profile (1) and having a somewhat larger diameter than the milling blades (5).

2. Device according to claim 1, characterized in that a little guide wheel (8) is provided for guiding a housing (7) surrounding the drive shaft (6) and the milling blades (5).

## Revendications

1. Dispositif d'usinage de rainures transversales (3) dans la face supérieure à nervures longitudinales de plaques de base et profilés anti-dérapants (1) analogues, comportant des disques (5) porte-lames ou outils de coupe analogues, clavetés sur un arbre (6) d'entraînement commun et des organes d'écartement qui soutiennent cet arbre des deux côtés pendant son mouvement d'avance au-dessus de la face supérieure des nervures longitudinales (2), dispositif caractérisé en ce que les organes d'écartement de l'arbre (6) d'entraînement et des disques (5) porte-lames sont deux roues (4) dentées de support, qui roulent sur la surface du fond du profilé (1) et dont le diamètre est un peu supérieur à celui de ces disques (5) porte-lames.

2. Dispositif selon la revendication 1, caractérisé en ce qu'une petite roue-guide (8) est destinée à guider un boîtier (7) qui entoure l'arbre (6) d'entraînement portant les disques (5) porte-lames.

Fig. 1

Fig. 1a

Fig. 2

EP 0 146 110 B1

Fig. 3

EP 0 146 110 B1